# EUROPEAN PATENT SPECIFICATION

(11) **EP 4 242 813 B1**
(45) Date of publication and mention of the grant of the patent: **16.09.2026**
(21) Application number: 22191400.5
(22) Date of filing: 22.08.2022
(51) Int. Cl.: G06F 3/04817

(54) **INFORMATION PROCESSING APPARATUS, PROGRAM, AND INFORMATION PROCESSING METHOD**
INFORMATIONSVERARBEITUNGSVORRICHTUNG, PROGRAMM UND INFORMATIONSVERARBEITUNGSVERFAHREN
APPAREIL DE TRAITEMENT D'INFORMATIONS, PROCÉDÉ DE TRAITEMENT D'INFORMATIONS ET PROGRAMME

(30) Priority: 11.03.2022 JP 2022038372
(43) Date of publication of application: 13.09.2023
(73) Proprietor: Fujifilm Business Innovation Corp., Tokyo 107-0052 (JP)
(72) Inventor: KITAZAWA, Yuka, Yokohama (JP)
(74) Representative: Meissner Bolte Partnerschaft mbB

(56) References cited:
- US-A- 5 918 226
- US-A1- 2002 022 900

## Description

### Background

### (i) Technical Field

The present disclosure relates to an information processing apparatus, a program, and an information processing method.

### (ii) Related Art

There has been used a workflow that predefines processing operations of a series of processes on electronic data. By specifying the workflow for executing the processes on the electronic data, the electronic data may be processed in accordance with the workflow. Execution of an electronic document in a workflow may be referred to herein as "enter an electronic document into a workflow".

Japanese Unexamined Patent Application Publication No. 8-190584 discloses a workflow system that predicts future progress of a workflow based on conditions related to the workflow, the status of the workflow, and information related to tasks of operators. Japanese Unexamined Patent Application Publication No. 2003-15923 discloses a computer system that displays information related to an image file displayed on a monitor screen in response to selection of the image file with a mouse cursor. US2002022900A1 relates to a process control system for performing a process control of work comprising a plurality of processes.

### Summary

A folder may be associated with a workflow. The associated folder stores electronic data to be executed in the workflow. For example, one workflow may be associated with a plurality of folders. In this case, electronic data moves from one associated folder to another as the processes in the workflow proceed. In other cases, one folder may be associated with a plurality of workflows.

A user may select a folder associated with a workflow on a display. In response to the selection, a processor may execute various processes related to the workflow.

Accordingly, it is an object of the present disclosure to execute processes presumably requested by a user who has selected a folder associated with a workflow.

According to a first aspect of the present disclosure, there is provided an information processing apparatus comprising a processor configured to: cause a display to display a folder associated with a workflow; if a user selects the folder with electronic data selected, execute the workflow on the electronic data; and if the user selects the folder without selecting the electronic data, cause the display to display a status of the workflow.

According to a second aspect of the present disclosure, the processor is configured to: cause the display to display a data icon corresponding to the electronic data; and if the user drags the data icon onto the folder, determine that the user selects the folder with the electronic data selected.

According to a third aspect of the present disclosure, the processor is configured to, if a cursor moving on a screen is placed on the folder by an action of the user without dragging the data icon, determine that the user selects the folder without selecting the electronic data.

According to a fourth aspect of the present disclosure, the processor is configured to, if the user selects the folder with the electronic data saved into a clipboard in a memory configured to temporarily save data, determine that the user selects the folder with the electronic data selected.

According to a fifth aspect of the present disclosure, the processor is configured to, if the user selects the folder without saving the electronic data into a clipboard in a memory configured to temporarily save data, determine that the user selects the folder without selecting the electronic data.

According to a sixth aspect of the present disclosure, there is provided a program causing a computer to execute a process for processing information, the process comprising: causing a display to display a folder associated with a workflow; if a user selects the folder with electronic data selected, executing the workflow on the electronic data; and if the user selects the folder without selecting the electronic data, causing the display to display a status of the workflow.

According to a seventh aspect of the present disclosure, there is provided a program causing a computer to execute a process for processing information, the process comprising: causing a display to display a folder associated with a workflow; if a user selects the folder with electronic data selected, causing the display to display a setting change screen to be used for changing settings of the workflow; and if the user selects the folder without selecting the electronic data, causing the display to display a status of the workflow.

According to an eighth aspect of the present disclosure, there is provided an information processing method comprising: causing a display to display a folder associated with a workflow; if a user selects the folder with electronic data selected, executing the workflow on the electronic data; and if the user selects the folder without selecting the electronic data, causing the display to display a status of the workflow.

According to the first aspect of the present disclosure, it is possible to execute processes presumably requested by the user who has selected the folder associated with the workflow.

According to the second aspect of the present disclosure, the user may select the folder with the electronic data selected by dragging and dropping the data icon onto the folder.

According to the third aspect of the present disclosure, the user may select the folder without selecting the electronic data by placing the cursor on the folder.

According to the fourth aspect of the present disclosure, the user may select the folder with the electronic data selected by selecting the folder with the electronic data saved into the clipboard.

According to the fifth aspect of the present disclosure, the user may select the folder without selecting the electronic data by selecting the folder without saving the electronic data into the clipboard.

According to the sixth aspect of the present disclosure, it is possible to execute processes presumably requested by the user who has selected the folder associated with the workflow.

According to the seventh aspect of the present disclosure, it is possible to execute processes presumably requested by the user who has selected the folder associated with the workflow.

According to the eighth aspect of the present disclosure, it is possible to execute processes presumably requested by the user who has selected the folder associated with the workflow.

### Brief Description of the Drawings

An exemplary embodiment of the present disclosure will be described in detail based on the following figures, wherein:
Fig. 1 illustrates the configuration of an information processing apparatus according to an exemplary embodiment;
Fig. 2 illustrates an example of the structure of a workflow;
Fig. 3 illustrates how a data icon is dragged onto a folder icon;
Fig. 4 illustrates an example of a setting change dialog;
Fig. 5 illustrates an example of a setting change box;
Fig. 6 illustrates an example of a process addition button;
Fig. 7 illustrates an example of a screen after cancellation of a setting change screen;
Fig. 8 illustrates an example of a setting application rule box;
Fig. 9 illustrates an example of a personal setting button;
Fig. 10 illustrates an example of a processing operation setting checkbox for setting processing operations when a user selects a folder icon with electronic data selected;
Fig. 11 illustrates a cursor placed on a folder icon;
Fig. 12 illustrates an example of a status dialog;
Fig. 13 illustrates a display example of processed data;
Fig. 14 illustrates a display example of an alert;
Fig. 15 illustrates a display example of a case where no electronic data is currently processed in the workflow;
Fig. 16 illustrates an example of the setting change box;
Fig. 17 illustrates an example of an action box; and
Fig. 18 is a flowchart illustrating a flow of a process in the information processing apparatus according to the exemplary embodiment.

### Detailed Description

### <Overview of information processing apparatus>

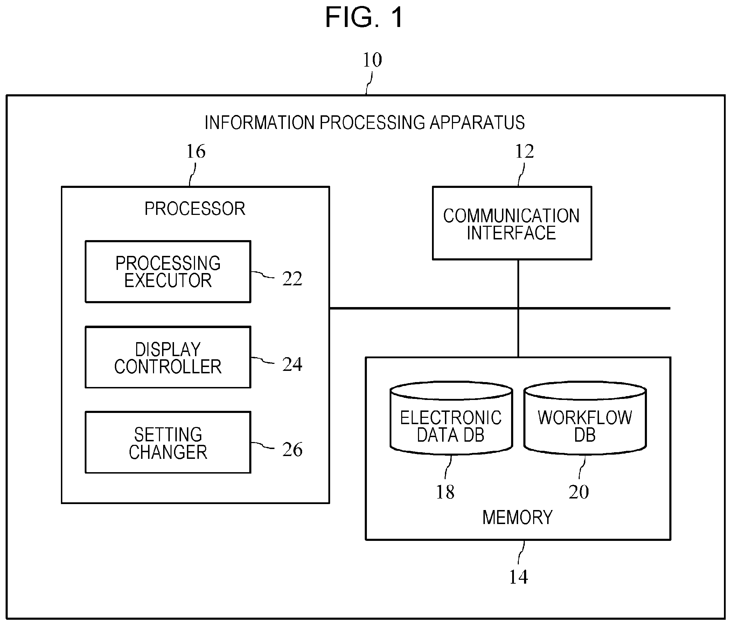

Fig. 1 illustrates the configuration of an information processing apparatus 10 according to an exemplary embodiment. The information processing apparatus 10 according to this exemplary embodiment is a server that provides a data management service for electronic data. In the data management service, for example, electronic data received from users is managed in a database, and the managed electronic data is provided to the users in response to users' request. In the data management service, various processes may be executed on the managed electronic data. The electronic data is typically an electronic document, but is not limited to the electronic document, and may be, for example, image data or program data.

Although details are described later, workflows may be defined in the data management service according to this exemplary embodiment. Each workflow includes preset processing operations of a series of processes on electronic data. The users may process the electronic data in accordance with the defined workflows. The users may set the processing operations of the processes in the workflows.

As long as functions described below may be exerted (in other words, an electronic data providing service described below may be provided), the information processing apparatus 10 is not limited to the server, and may be constituted by various computers. The functions of the information processing apparatus 10 described below may be implemented by cooperation of a plurality of computers.

As illustrated in Fig. 1, the information processing apparatus 10 according to this exemplary embodiment includes a communication interface 12, a memory 14, and a processor 16. If the information processing apparatus 10 is a personal computer or a tablet terminal, the information processing apparatus 10 may further include a display that displays various screens (e.g., liquid crystal panel) or an input interface to be used for inputting user's instructions (e.g., mouse or touch panel).

Examples of the communication interface 12 include a network interface card (NIC). The communication interface 12 exerts a function of communicating with other apparatuses via a communication network such as a local area network (LAN) or the Internet. Since the information processing apparatus 10 is the server in this exemplary embodiment, the communication interface 12 is accessed by a user terminal (e.g., personal computer or tablet terminal) of a user who wants to obtain the data management service. The communication interface 12 transmits, to the user terminal, screen information for displaying various screens on a display of the user terminal and electronic data managed in the data management service.

The memory 14 includes a hard disk drive (HDD), a solid state drive (SSD), an embedded multimedia card (eMMC), a read only memory (ROM), or a random access memory (RAM). The memory 14 stores an information processing program for operating individual components of the information processing apparatus 10. The information processing program may be stored in a non-transitory computer readable storage medium such as a universal serial bus (USB) memory or a CD-ROM. The information processing apparatus 10 may read and execute the information processing program in the storage medium. The memory 14 stores a user database (DB) (not illustrated) in which user IDs for uniquely identifying the users registered in the data management service are associated with authentication information (e.g., passwords).

As illustrated in Fig. 1, the memory 14 stores an electronic data DB 18 and a workflow DB 20.

The electronic data DB 18 stores electronic data managed in the information processing apparatus 10, that is, the data management service, and attribute information of the electronic data. In the electronic data DB 18 of this exemplary embodiment, a plurality of folders that store the electronic data are defined and each piece of electronic data is stored in the electronic data DB 18 by being stored in the folder. Examples of the attribute information of the electronic data include, but not limited to, information indicating the name of the electronic data, an extension (data format), a data amount, a user ID of a user who has uploaded the electronic data in the data management service, and a date of upload in the data management service.

In particular, the attribute information of electronic data currently subjected to processes related to a workflow (details are described later) includes information indicating the workflow. Examples of the information indicating the workflow include information for identifying the workflow into which the electronic data has been entered, and a user ID for identifying a user who has entered the electronic data into the workflow. In other words, the electronic data stored in the electronic data DB 18 includes electronic data associated with the workflow in which the processes are currently executed on the electronic data.

The workflow DB 20 stores information related to each workflow. The information related to the workflow includes information indicating settings of the workflow and information indicating the status of the workflow.

The settings of the workflow include the structure of the workflow. The structure of the workflow indicates processing operations of processes to be sequentially executed on electronic data, and the order of the processes. The workflow may include a plurality of processes to be executed in series, or processes to be executed in parallel. The workflow of this exemplary embodiment may include a single process.

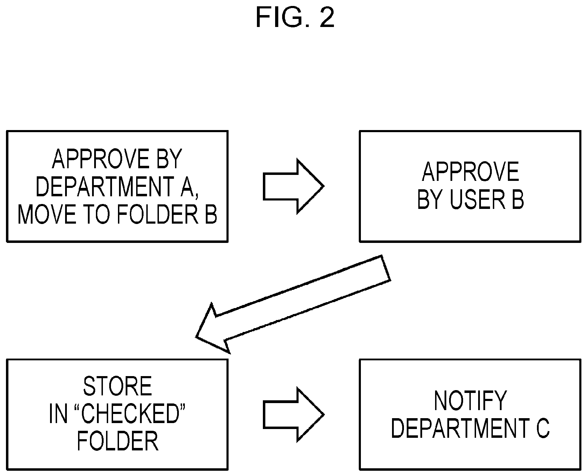

Fig. 2 illustrates an example of the structure of the workflow. In the workflow illustrated in Fig. 2, "Approve by department A, move to folder B" is defined as a first process (process to be executed firstly), "Approve by user B" is defined as a second process to be executed after completion of the first process (process to be executed secondly), "Store in "checked" folder" is defined as a third process to be executed after completion of the second process (process to be executed thirdly), and "Notify department C" is defined as a fourth process to be executed after completion of the third process (process to be executed fourthly).

Since such a workflow is defined in advance, the user may process electronic document in accordance with the workflow by entering the electronic document into the workflow.

The settings of the workflow include the processing operations of the processes in the workflow. For example, the settings of the workflow include the processing operation "Approve by department A, move to folder B" of the first process in the workflow illustrated in Fig. 2.

As in the first and third processes in the workflow illustrated in Fig. 2, folders defined in the electronic data DB 18 may be associated with the processes in the workflow. For example, the folder B is associated with the first process in the workflow illustrated in Fig. 2, and the "checked" folder is associated with the third process. In this manner, one or more folders may be associated with the workflow. In other words, the folders defined in the electronic data DB 18 include a folder associated with a specific workflow. One folder may be associated with a plurality of workflows. In other words, a plurality of workflows may use the same folder.

In general, electronic data entered into a workflow is stored in a folder associated with a process in the workflow. If folders are associated with a plurality of processes in the workflow, the electronic data entered into the workflow moves between the folders as the processes in the workflow proceed. For example, in the workflow illustrated in Fig. 2, the electronic data is stored in the folder B in the first process, and is stored in the "checked" folder from the folder B in the third process.

In the case where the folders are associated with the processes in the workflow, the settings of the workflow include the folders associated with the processes in the workflow.

The status of the workflow is a status of each electronic document entered into the workflow. For example, the status indicates which process has been completed on each electronic document among the processes defined in the workflow, or which folder defined in the workflow stores each electronic document.

As illustrated in Fig. 1, the processor 16 functions as a processing executor 22, a display controller 24, and a setting changer 26 based on the information processing program stored in the memory 14.

The processing executor 22 executes various processes related to the data management service. For example, in response to access to the data management service from a user terminal of a user, the processing executor 22 authenticates the user by a predetermined method (e.g., input of a user ID and a password). Then, the processing executor 22 executes a process on electronic data managed in the data management service based on the user's instruction. For example, the processing executor 22 stores electronic data from the user terminal into a folder in the electronic data DB 18 in response to the user's instruction. In response to the user's request, the processing executor 22 executes a process on electronic data stored in the electronic data DB 18, or transmits the electronic data to the user terminal of the user.

In particular, the processing executor 22 executes, in the data management service, a process related to electronic data in accordance with a workflow defined in the workflow DB 20. For example, in response to a user's instruction to enter predetermined electronic data (may be electronic data stored in the electronic data DB 18 or electronic data newly transmitted from a user terminal) into a certain workflow, the processing executor 22 refers to the workflow DB 20 to obtain settings of the workflow (e.g., structure, processing operation, and folder) under the user's instruction, and executes a process on the predetermined electronic data in accordance with the workflow.

The display controller 24 executes a process of causing the display to display screens related to the data management service. Since the information processing apparatus 10 is the server in this exemplary embodiment, the display controller 24 causes a display of a user terminal of a user accessing the data management service to display the screens related to the data management service. If the information processing apparatus 10 is a personal computer or a tablet terminal including a display, the display controller 24 may cause the display of the information processing apparatus 10 to display the screens related to the data management service.

The setting changer 26 executes a process of changing settings of a workflow defined in the workflow DB 20 based on a user's instruction.

### <Overview of processes in processor>

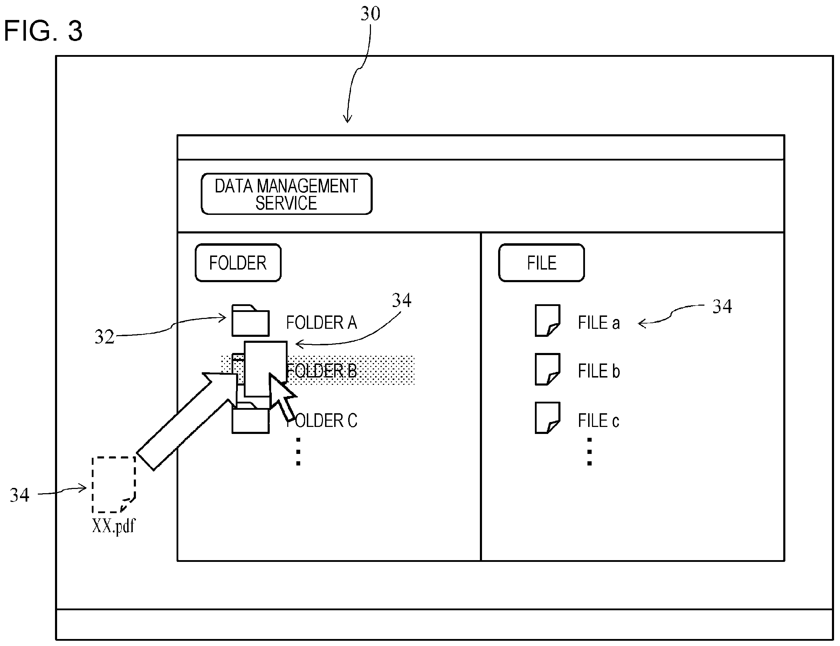

Details of the processes to be performed by the processing executor 22, the display controller 24, and the setting changer 26 are described with reference to Fig. 3 to Fig. 17 as appropriate.

Fig. 3 illustrates an example of a screen related to the data management service and displayed on the display of the user terminal by the display controller 24. In this exemplary embodiment, the display controller 24 causes the display of the user terminal to display a data management service window 30 showing contents of the data management service as illustrated in Fig. 3. The data management service window 30 shows folder icons 32 indicating folders defined in the electronic data DB 18, and data icons 34 indicating pieces of electronic data stored in the electronic data DB 18 (e.g., data icons corresponding to pieces of data stored in a specific folder). The screen showing such contents may be an initial screen to be displayed first in response to the access to the data management service from the user.

The contents in the data management service window 30 illustrated in Fig. 3 are an example of the screen provided from the data management service (i.e., the screen displayed by the display controller 24), and the data management service window 30 may show various screens in response to user's instructions. For example, in response to the user's instructions, the data management service window 30 may show a list of workflows defined in the workflow DB 20 and a screen showing settings of each workflow.

The folder icons 32 shown in the data management service window 30 include a folder icon 32 corresponding to a folder associated with a workflow. In other words, the data management service window 30 shows the folder icon 32 corresponding to the folder associated with the workflow. The user may select the folder icon 32 with electronic data selected, thereby entering the selected electronic data into the workflow associated with the folder corresponding to the folder icon 32.

The user of the data management service may change settings of a workflow defined in the workflow DB 20. To change settings of a workflow, the user generally performs a series of actions described below. In the data management service window 30, the user performs an action for displaying a list of workflows, selects a desired workflow, performs an action for displaying a setting change screen for the settings of the selected workflow, and changes the settings on the setting change screen. In this manner, the user may change the settings of the workflow. As described later in detail, the user in this exemplary embodiment may display the setting change screen for the settings of the workflow by selecting the folder icon 32 with electronic data selected.

If a folder icon 32 indicating a folder defined in the electronic data DB 18 is displayed as in the data management service window 30, the user of the data management service may want to view, regarding the folder as a reference point, the statuses of one or more workflows associated with the folder. To view the status of a workflow, the user generally performs a series of actions described below. In the data management service window 30, the user performs an action for displaying a list of workflows, selects a desired workflow, and performs an action for displaying a screen showing the status of the selected workflow. In this manner, the user may view the status of the workflow. In this method, however, it is difficult to easily grasp the statuses of one or more workflows associated with the currently displayed folder icon 32. In this method, the status of the workflow is displayed with time and effort. As described later in detail, the user in this exemplary embodiment may display the status of the workflow associated with the folder corresponding to the folder icon 32 by selecting the folder icon 32.

If the screen shows the folder icon 32 corresponding to the folder associated with the workflow as described above, the processor 16 of this exemplary embodiment executes, in response to selection of the folder icon 32 by the user, a process of entering electronic data into the workflow associated with the folder, a process of displaying the setting change screen for the workflow, and a process of displaying the status of the workflow. If those processes are executed simultaneously, the contents displayed on the screen may be completed. Therefore, the processor 16 may execute any one of the processes in response to the selection of the folder icon 32 by the user.

In response to the selection of the folder icon 32 by the user, the processor 16 may display a screen for prompting the user to select any one of the processes to be executed, but the display process and the user's selection may be cumbersome. Therefore, the processor 16 may automatically execute the process presumably requested by the user based on the type of user's action (type of instruction).

### <Process (1) in case where user selects folder icon with electronic data selected>

If the user selects the folder icon 32 corresponding to the folder associated with the workflow with the electronic data selected, the processing executor 22 starts to execute processes in the workflow on the electronic data. The reason is that, when the user selects the folder icon 32 with the electronic data selected, there is a strong possibility that the user wants to enter the currently selected electronic data into the workflow associated with the folder corresponding to the folder icon 32.

In this exemplary embodiment, if the user drags the data icon 34 onto the folder icon 32 corresponding to the folder associated with the workflow, the processor 16 determines that the user selects the folder icon 32 corresponding to the folder associated with the workflow with the electronic data selected.

Referring to, for example, Fig. 3, the folder B is associated with a certain workflow. The user selects electronic data to be entered into the workflow (electronic data "XX.pdf"), and drags a data icon 34 corresponding to the selected electronic data onto a folder icon 32 corresponding to the folder B as illustrated in Fig. 3. The drag of the data icon 34 onto the folder icon 32 corresponds to selection of the folder associated with the workflow (folder B) by the user with the electronic data (electronic data "XX.pdf") selected. The electronic data is entered into the workflow, and the processing executor 22 starts to execute processes in the workflow on the electronic data. If the folder selected by the user is associated with a plurality of workflows, the display controller 24 may display a screen for prompting the user to select any one of the workflows to enter the electronic data, and the processing executor 22 may start to execute processes in the selected workflow on the electronic data.

The folder icon 32 corresponding to the folder B is not only the folder object but may also be an area including the folder name displayed on the side. The electronic data selected by the user may be electronic data stored in the user terminal (i.e., electronic data that has not been stored in the electronic data DB 18), or electronic data stored in the electronic data DB 18 with its corresponding data icon 34 shown in the data management service window 30. The drag destination folder icon 32 is shown in the data management service window 30.

The user's action for selecting the folder icon 32 corresponding to the folder associated with the workflow with the electronic data selected is not limited to the dragging action. For example, the user may perform an action of pressing "Ctrl" and "C" keys with the electronic data specified to save the electronic data into a clipboard, and selecting the folder icon 32 corresponding to the folder associated with the workflow (e.g., clicking the folder icon 32 with a cursor moving on the screen by a mouse action). The clipboard is an area in the memory 14 that may temporarily save data.

### <Process (2) in case where user selects folder icon with electronic data selected>

If the user selects the folder icon 32 corresponding to the folder associated with the workflow with the electronic data selected, the display controller 24 may cause the display of the user terminal of the user to display the setting change screen for the settings of the workflow instead of the processing executor 22 starting to execute the processes in the workflow on the electronic data. The reason is that, when the user selects the folder icon 32 with the electronic data selected, the user may also want to enter the electronic data into the workflow associated with the folder corresponding to the folder icon 32 while changing the settings of the workflow.

In response to the selection of the folder icon 32 corresponding to the folder associated with the workflow by the user with the electronic data selected, the display controller 24 displays the setting change screen for the workflow associated with the folder B in the data management service window 30. Also in this case, the user may drag the data icon 34 onto the folder icon 32 corresponding to the folder associated with the workflow or select the data icon 34 with the electronic data saved in the clipboard, thereby selecting the folder icon 32 corresponding to the folder associated with the workflow with the electronic data selected.

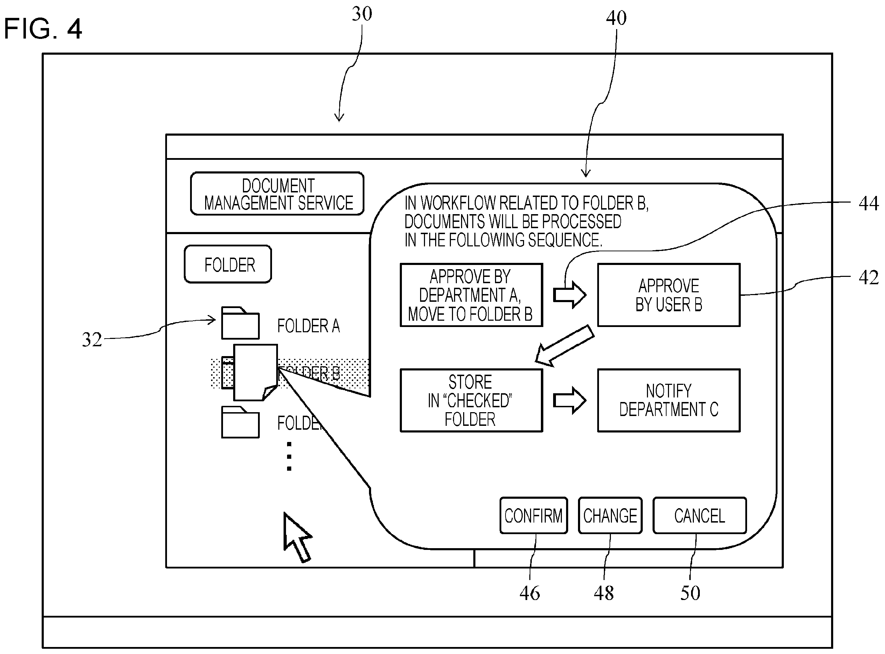

Fig. 4 illustrates a display example of the setting change screen. In this exemplary embodiment, the display controller 24 displays, as the setting change screen, a setting change dialog 40 in the data management service window 30 to change the settings of the workflow selected by the user (in the example of Fig. 3, the workflow associated with the folder B).

In this exemplary embodiment, the setting change dialog 40 shows the structure of the workflow. Specifically, the setting change dialog 40 includes a processing operation object 42 indicating an operation of a process in the workflow. If the workflow includes a plurality of processes, the setting change dialog 40 includes a plurality of processing operation objects 42 and arrow objects 44 indicating the order of the processes. The setting change dialog 40 also includes a confirmation button 46, a change button 48, and a cancellation button 50.

If the folder selected by the user is associated with a plurality of workflows, the settings of the plurality of workflows may be changed in the setting change dialog 40.

The display controller 24 displays the setting change dialog 40 by simply dragging the data icon 34 onto the folder icon 32 instead of drag and drop of the data icon 34 onto the folder icon 32. When the user drags the data icon 34 sequentially onto a plurality of folder icons 32, the setting change dialog 40 sequentially shows the structures of the workflows associated with the respective folders. Thus, the user may view the structures of the workflows associated with the respective folders by a simple action.

The user views the setting change dialog 40 displayed by dragging the data icon 34 onto the folder icon 32, and performs a dropping action if the user wants to change the settings of the workflow shown in the setting change dialog 40. In this manner, the display in the setting change dialog 40 is maintained.

In the setting change dialog 40 of this exemplary embodiment, the user may simply change a processing operation of each process in the specified workflow, change a folder associated with the process, and add a new process to the workflow. That is, the setting change dialog 40 of this exemplary embodiment is a dialog for a simple setting change of the workflow specified by the user. Alternatively, a detailed setting change of the workflow (e.g., change of all the settings) may be made in the setting change dialog 40.

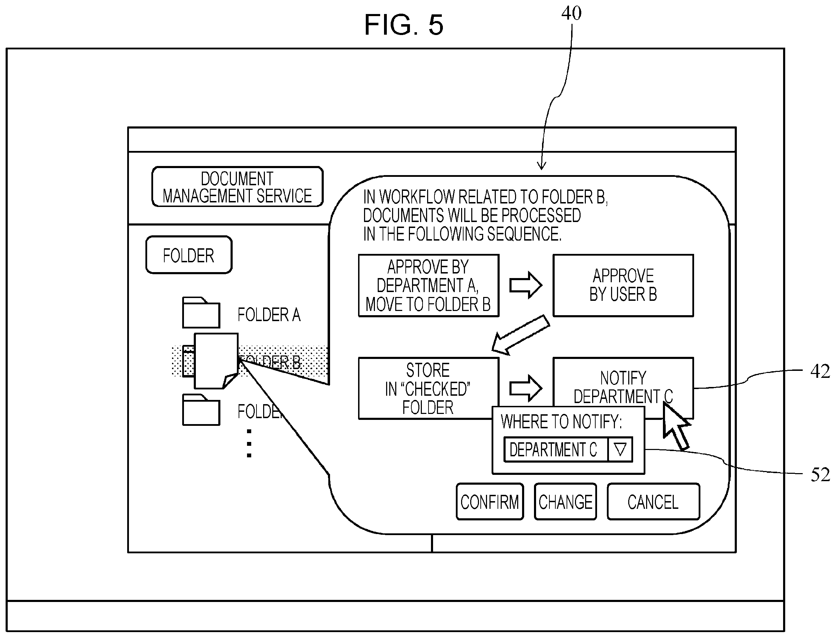

If the user selects the processing operation object 42 by, for example, placing the cursor on the processing operation object 42 by a mouse action, the display controller 24 displays a setting change box 52 for changing details of the selected processing operation object 42 as illustrated in Fig. 5. In the setting change box 52 in the example of Fig. 5, the notification destination in the processing operation "Notify department C" indicated by the selected processing operation object 42 may be changed. The processing operation to be changed is not limited thereto. For example, if the processing operation indicated by the selected processing operation object 42 is to store electronic data in a folder, the folder to store the electronic data by the process may be changed in the setting change box 52.

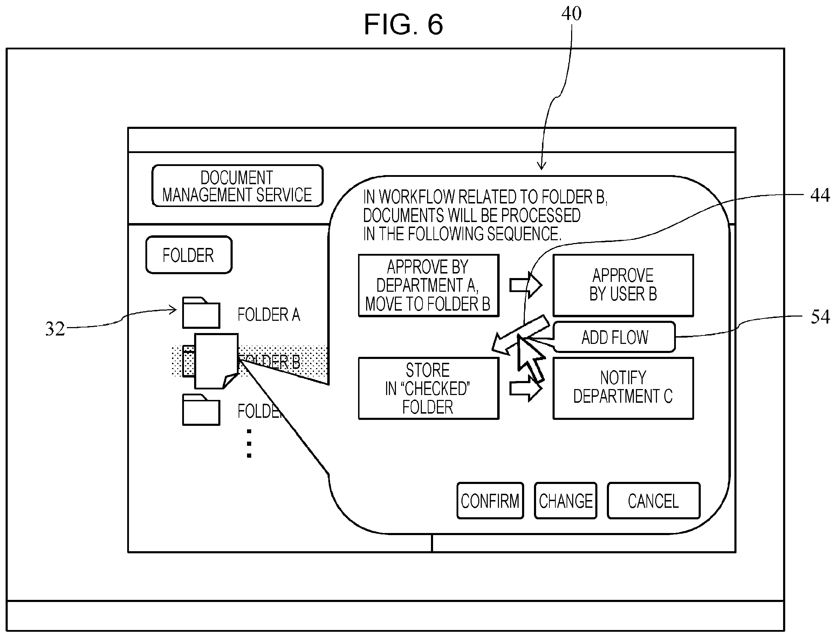

If the user selects the arrow object 44 by, for example, placing the cursor on the arrow object 44 by a mouse action, the display controller 24 displays a process addition button 54 for adding a new process to be executed between two processing operations connected by the selected arrow object 44 as illustrated in Fig. 6. In response to a user's action on the process addition button 54, the display controller 24 displays a box for determining details of the process to be added (not illustrated), and the user determines the details of the process in the box. The new process is added at a position pointed by the selected arrow object 44.

If the user changes the settings of the workflow in the setting change dialog 40 and operates the confirmation button 46, the setting changer 26 changes the settings of the workflow. That is, the setting changer 26 updates the settings of the workflow in the workflow DB. That is, the confirmation button 46 is used by the user for inputting an instruction to confirm the settings of the workflow. When the user operates the confirmation button 46, the display controller 24 closes the setting change dialog 40, and the processing executor 22 starts to execute the workflow on the electronic data selected by the user. In other words, the electronic data selected by the user (in the example of Fig. 3, the electronic data "XX.pdf") is entered into the workflow.

The change button 48 in the setting change dialog 40 is used for displaying a detailed setting change screen for a detailed setting change of the workflow. That is, when the user operates the change button 48, the display controller 24 displays the detailed setting change screen for the workflow in place of the setting change dialog 40.

The cancellation button 50 in the setting change dialog 40 is used for canceling the setting change of the workflow in the setting change dialog 40. That is, when the user operates the cancellation button 50, the setting changer 26 dismisses the settings made by the user in the setting change dialog 40, and does not update the settings of the workflow in the workflow DB.

When the user operates the cancellation button 50, the display controller 24 closes the setting change dialog 40. The user may want to cancel the change of the settings of the workflow and enter the selected electronic data into the workflow. In this case, time and effort are needed to drag and drop the data icon 34 corresponding to the electronic data onto the folder icon 32 corresponding to the workflow again after the setting change dialog 40 is closed.

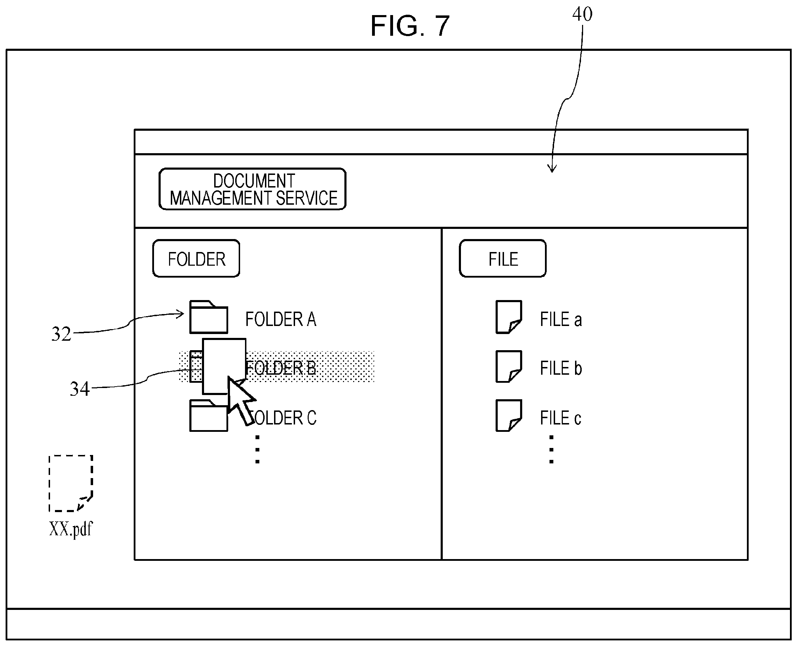

In view of this, the display controller 24 may hold the dragged data icon 34 on the folder icon 32 on the screen as illustrated in Fig. 7. In response to a user's action on the held data icon 34 (e.g., click), the electronic data corresponding to the data icon 34 may be entered into the workflow corresponding to the folder icon 32.

It may be inappropriate that the settings of the workflow changed in the setting change dialog 40 are applied to the processes on all the pieces of electronic data entered into the workflow. Therefore, the user may set a range of electronic data to which the changed settings of the workflow are applied. The settings of the workflow before the change by the user's action on the setting change dialog 40 are referred to herein as "pre-change settings", and the settings of the workflow after the change by the user's action on the setting change dialog 40 are referred to herein as "post-change settings". In the pieces of electronic data entered into the workflow, the electronic data to which the post-change settings are applied is referred to as "first electronic data", and the electronic data to which the pre-change settings are applied (in other words, the electronic data other than the first electronic data) is referred to as "second electronic data".

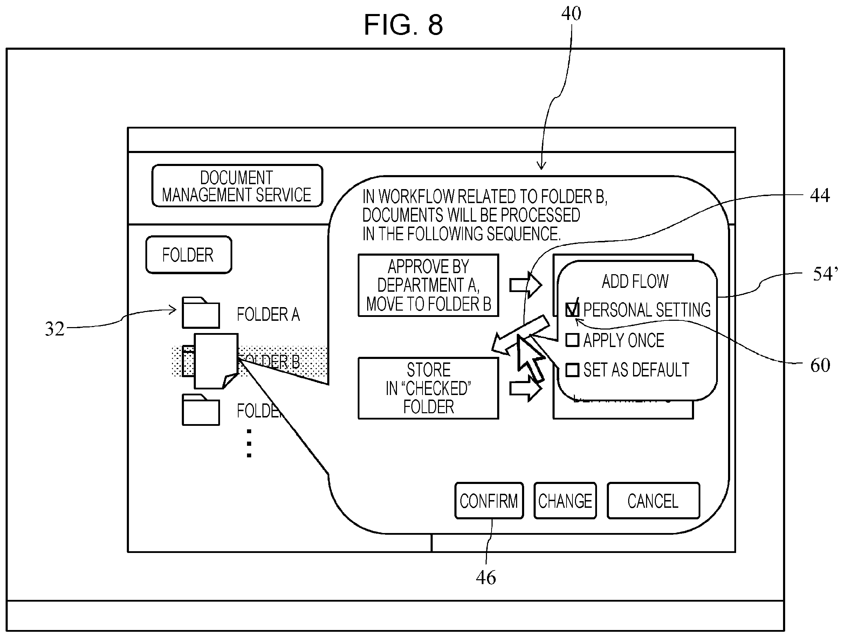

In this exemplary embodiment, the user may specify an application rule for determining the range of the first electronic data in the setting change dialog 40. For example, in response to the selection of the arrow object 44 by the user, the display controller 24 displays a process addition button 54' including application rule checkboxes 60 to be used for specifying the application rule as illustrated in Fig. 8. In the example of Fig. 8, the process addition button 54' includes selective application rule checkboxes 60 indicating "Personal setting", "Apply once", and "Set as default".

For example, if the user operates the confirmation button 46 with "Personal setting" selected in the application rule checkboxes 60, the range of the first electronic data to which the post-change settings are applied, in this case, the first electronic data on which the added new process is executed, may be set to the electronic data entered into the workflow by the user. In other words, electronic data entered into the workflow by any other user is the second electronic data to which the pre-change settings are applied. In this case, the added new process is not executed on the second electronic data.

If the user operates the confirmation button 46 with "Apply once" selected in the application rule checkboxes 60, the range of the first electronic data to which the post-change settings are applied may be set only to the electronic data currently entered into the workflow by the user. In other words, electronic data other than the electronic data currently selected by the user is the second electronic data to which the pre-change settings are applied.

If the user operates the confirmation button 46 with "Set as default" selected in the application rule checkboxes 60, the range of the first electronic data to which the post-change settings are applied may be set to all the pieces of electronic data entered into the workflow. In this case, there is no second electronic data.

The above-mentioned application rules for determining the range of the first electronic data are examples, and various other application rules are conceivable. For example, the first electronic data may be a predetermined number of pieces of electronic data entered into the workflow, electronic data entered into the workflow within a predetermined period, or electronic data entered by a user belonging to a certain group.

When the user operates the confirmation button 46 with the settings of the workflow changed while specifying the application rule for determining the range of the first electronic data in the setting change dialog 40, the setting changer 26 newly stores the post-change settings in association with the workflow in the workflow DB 20 while keeping the pre-change settings associated with the workflow. The setting changer 26 also stores, in the workflow DB 20, the specified application rule and the user ID of the user in association with the workflow.

When the electronic data is entered into the workflow, the processing executor 22 refers to the workflow DB to determine whether the electronic data is the first electronic data or the second electronic data, in other words, whether to execute the workflow on the electronic data by applying the pre-change settings or the post-change settings.

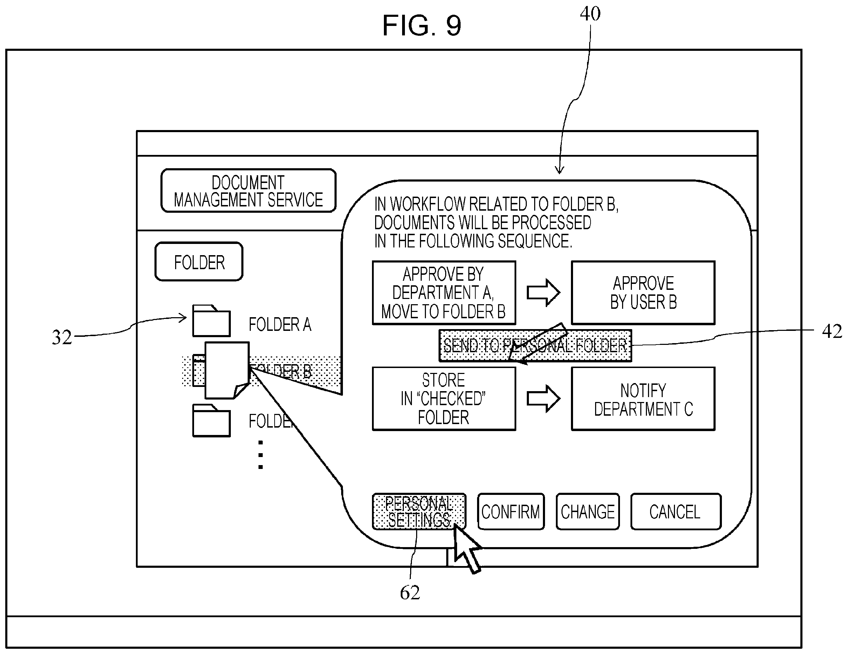

The method for specifying the application rule for determining the range of the first electronic data is not limited to the method described above. For example, as illustrated in Fig. 9, the display controller 24 may display the setting change dialog 40 including a personal setting button 62. If the user operates the personal setting button 62 and changes the settings of the workflow, the range of the first electronic data to which the post-change settings are applied may be set to the electronic data entered into the workflow by the user.

The user may grasp whether the settings changed in the setting change dialog 40 are applied only to processes on the electronic data entered by the user or also to processes on electronic data entered into the workflow by other users. Therefore, the display controller 24 may discriminably display, in the setting change dialog 40, information indicating whether the changed settings are applied only to processes on the electronic data entered by the user or also to processes on electronic data entered into the workflow by other users.

For example, if the user operates the personal setting button 62 and changes the settings to add a new process "Send to personal folder", the display controller 24 displays, as illustrated in Fig. 9, a processing operation object 42 corresponding to the process "Send to personal folder" in a format different from those of the other processing operation objects 42 (i.e., the processing operation objects 42 present before the change). The user may grasp that the process "Send to personal folder" is applied only to the electronic data entered by the user. Also in the case where "Personal setting" or "Apply once" is selected in the application rule checkboxes 60 in the example of Fig. 8, the display controller 24 may discriminably display, in the setting change dialog 40, information indicating whether the changed settings are applied only to processes on the electronic data entered by the user or also to processes on electronic data entered into the workflow by other users.

The user may make a setting as to whether the processing executor 22 starts to execute the processes in the workflow on the electronic data or the display controller 24 displays the setting change dialog 40 for the workflow in response to the selection of the folder icon 32 corresponding to the folder associated with the workflow by the user with the electronic data selected. An operation mode of the information processing apparatus 10 in which the display controller 24 displays the setting change dialog 40 for the workflow in response to the selection of the folder icon 32 corresponding to the folder associated with the workflow by the user with the electronic data selected is referred to herein as "first operation mode". An operation mode of the information processing apparatus 10 in which the processing executor 22 starts to execute the processes in the workflow on the electronic data in response to the selection of the folder icon 32 corresponding to the folder associated with the workflow by the user with the electronic data selected is referred to herein as "second operation mode".

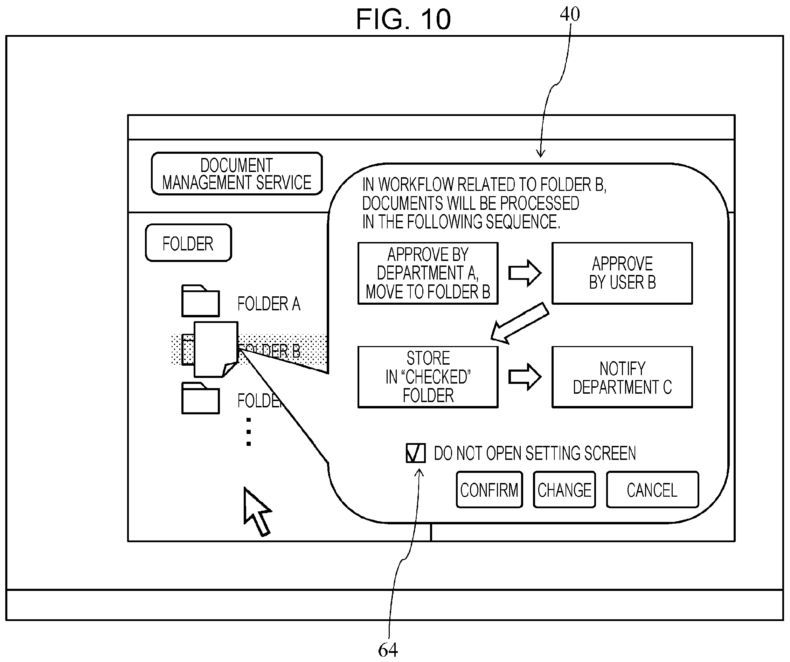

Various methods may be employed as a method for setting the operation mode of the information processing apparatus 10. In this exemplary embodiment, as illustrated in Fig. 10, the display controller 24 may display the setting change dialog 40 including a processing operation setting checkbox 64 to be used for setting the operation mode of the information processing apparatus 10. By marking the processing operation setting checkbox 64, the user may change the operation mode of the information processing apparatus 10 from the first mode to the second mode. The operation mode of the information processing apparatus 10 may be changed to the first mode again in a different setting screen.

The operation mode of the information processing apparatus 10 may be set for each user. For example, in a user DB stored in the memory 14, the user IDs are prestored in association with pieces of information indicating operation modes to be set in response to access to the information processing apparatus 10 (i.e., data management service) from users indicated by the user IDs, respectively. The display controller 24 determines, based on the authenticated user ID and the information stored in the user DB, the operation mode of the information processing apparatus 10, that is, whether to display the setting change dialog 40 in response to a specific action of the user.

### <Process in case where user selects folder icon without selecting electronic data>

If the user selects the folder icon 32 corresponding to the folder associated with the workflow without selecting the electronic data, the display controller 24 causes the display of the user terminal of the user to display the status of the workflow. The reason is that, when the user selects the folder icon 32 without selecting the electronic data, there is a strong possibility that the user does not at least want to enter the electronic data into the workflow but simply wants to view the status of the workflow.

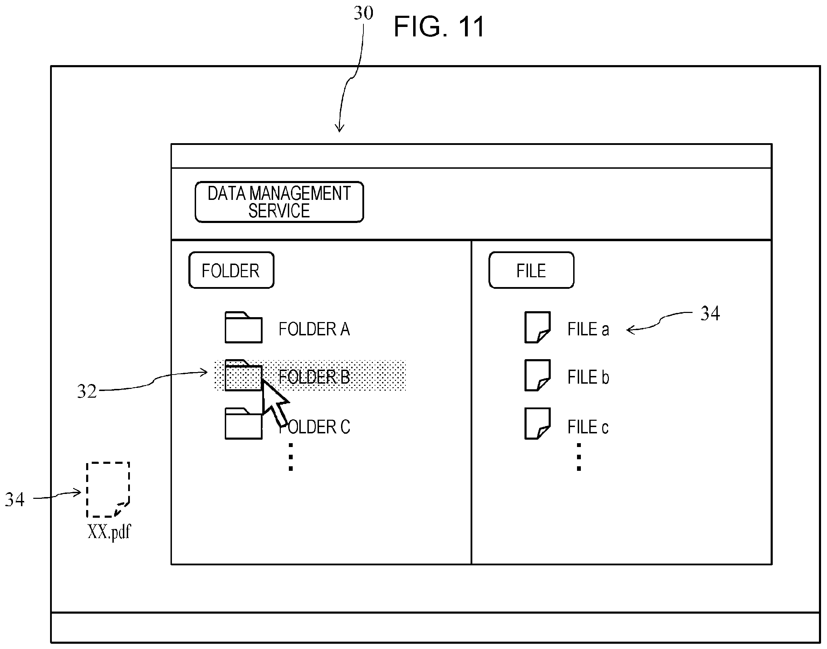

In this exemplary embodiment, if the cursor moving on the screen by a user's mouse action is placed on the folder icon 32 corresponding to the folder associated with the workflow without dragging the data icon 34 as illustrated in Fig. 11, the processor 16 determines that the user selects the folder icon 32 corresponding to the folder associated with the workflow without selecting the electronic data. Therefore, the display controller 24 displays the status of the workflow in the data management service window 30.

The user's action for selecting the folder icon 32 corresponding to the folder associated with the workflow without selecting the electronic data is not limited to the cursor action. For example, the user may perform an action of selecting the folder icon 32 corresponding to the folder associated with the workflow without saving the electronic data into the clipboard.

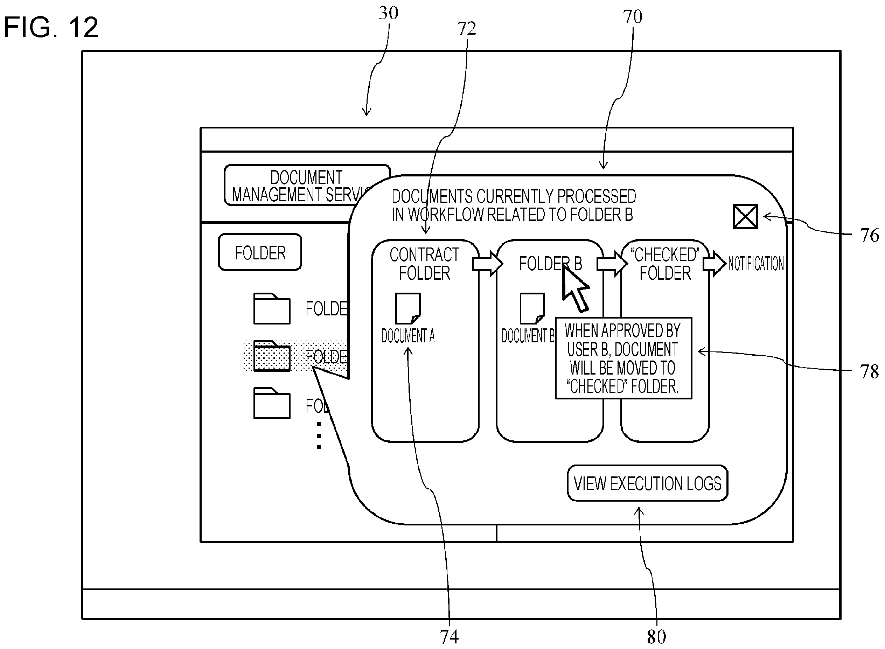

Fig. 12 illustrates a display example of the status of the workflow. In this exemplary embodiment, the display controller 24 displays, as the status of the workflow, a status dialog 70 in the data management service window 30 to show the status of the workflow associated with the folder selected by the user (in the example of Fig. 12, the folder B).

In the status dialog 70 of this exemplary embodiment, the display controller 24 displays a correlation between the folder associated with the workflow and the electronic data stored in the folder. The display format of the status is not limited thereto. For example, the display controller 24 may display the status in the form of a table or a graph showing which process in the workflow has been completed on each piece of electronic data entered into the workflow.

Specifically, the display controller 24 of this exemplary embodiment displays folder objects 72 corresponding to one or more folders associated with the workflow in the status dialog 70. The folder objects 72 in the status dialog 70 include a folder object 72 corresponding to the folder selected by the user (in the example of Fig. 12, the folder B). The order of the processes in the workflow may clearly be shown by connecting the folder objects 72 by arrow objects.

The display controller 24 displays, in association with each folder object 72, a data icon 74 corresponding to the electronic data stored in the folder corresponding to the folder object 72. In this exemplary embodiment, the folder object 72 has a box shape, and the display controller 24 displays the data icon 74 corresponding to the electronic data stored in the folder corresponding to the folder object 72 within the box of the folder object 72. The user may grasp which electronic data is stored in each folder associated with the workflow, that is, the status of each piece of electronic data in the workflow.

If there is difficulty in simultaneously displaying a plurality of folder objects 72 in the status dialog 70 as in a case where many folders are associated with the workflow, the screen may be scrolled in the status dialog 70.

In this exemplary embodiment, the display controller 24 displays, in the status dialog 70, only the data icon 74 corresponding to the electronic data entered into the workflow by the user who has selected the folder. In other words, the display controller 24 does not display, in the status dialog 70, a data icon 74 corresponding to electronic data entered into the workflow by any other user. Specifically, the display controller 24 identifies the electronic data entered into the workflow by the user based on the information stored in the electronic data DB 18, and displays the data icon 74 corresponding to the identified electronic data in the status dialog 70. In the status dialog 70, the data icons 74 corresponding to pieces of electronic data entered into the workflow by all the users may be displayed. The user may switch the display of only the data icon 74 corresponding to the electronic data entered into the workflow by the user and the display of the data icons 74 corresponding to the pieces of electronic data entered into the workflow by all the users.

If the folder selected by the user is associated with a plurality of workflows, the display controller 24 may display the statuses of the plurality of workflows in the status dialog 70.

In this exemplary embodiment, the display controller 24 displays the status dialog 70 by placing the cursor on the folder icon 32 by a user's action. The user may view, regarding the folder on the screen as a reference point, the statuses of one or more workflows associated with the folder. When the user moves the cursor sequentially onto a plurality of folder icons 32, the status dialog 70 sequentially shows the statuses of the workflows associated with the respective folders. Thus, the user may view the statuses of the workflows associated with the respective folders by a simple action.

The status dialog 70 includes a close button 76. The display controller 24 closes the status dialog 70 in response to a user's action on the close button 76.

If the user selects the folder object 72 by placing the cursor on the folder object 72 in the status dialog 70, the display controller 24 may display a processing operation box 78 indicating a processing operation associated with the folder corresponding to the folder object 72. The user may grasp the processing operation of each process in the workflow in the status dialog 70. Since the status dialog 70 may show the processing operation of each process in the workflow (including the folder associated with each process) and the order of the processes, the status dialog 70 may be regarded as showing the structure of the workflow.

The status dialog 70 includes a log viewing button 80. When the user operates the log viewing button 80, the display controller 24 displays, as the status of the workflow in the status dialog 70, processed electronic data that has previously entered into the workflow and has been subjected to the processes in the workflow.

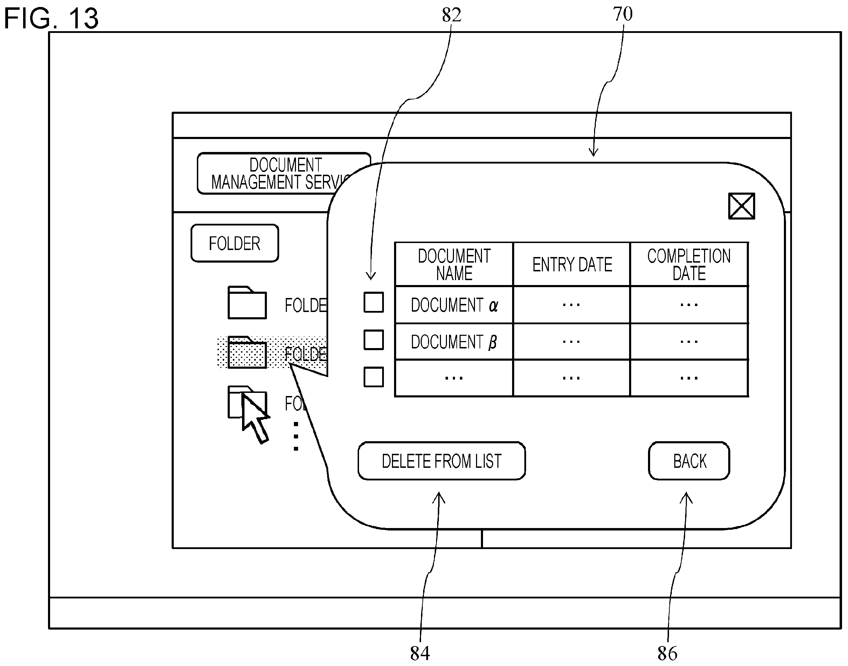

Fig. 13 illustrates a display example of the processed data. In the example of Fig. 13, a data name of each piece of processed data, a date of entry of the processed data into the workflow, and a date of completion of the processes in the workflow on the processed data are shown in the form of a table. The display example of the processed data is not limited thereto. In the example of Fig. 13, the display controller 24 displays deletion checkboxes 82 associated with the respective pieces of processed data, and a deletion button 84. When the user selects any deletion checkbox 82 and operates the deletion button 84, the processed data associated with the deletion checkbox 82 is no longer displayed. The display controller 24 displays a return button 86. When the user operates the return button 86, the display controller 24 displays the information illustrated in Fig. 12 in the status dialog 70 again.

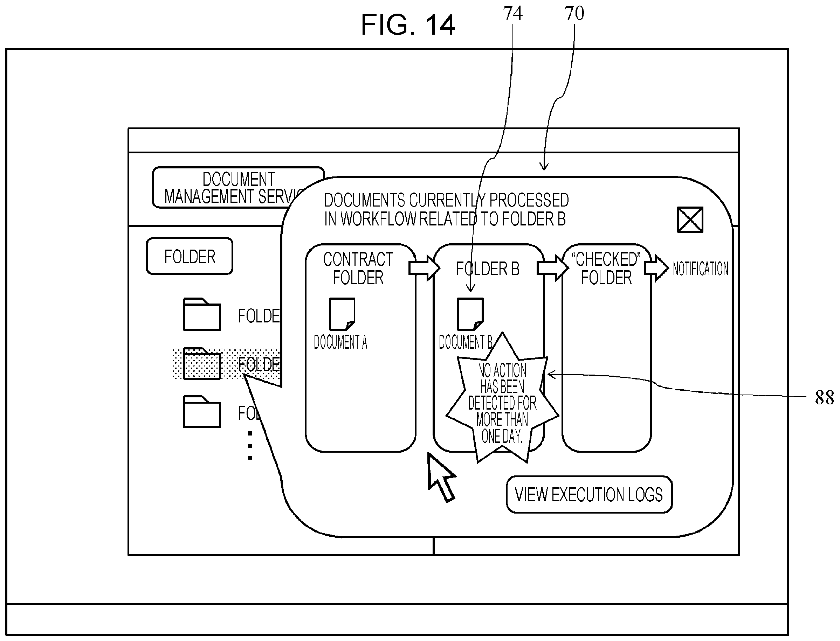

If the pieces of electronic data entered into the workflow associated with the folder selected by the user include electronic data whose process is stuck for a predetermined period or longer, the display controller 24 may display an alert about the electronic data in the status dialog 70. Fig. 14 illustrates a display example of the alert. For example, if the process on a document B in the workflow is stuck for the predetermined period or longer, the display controller 24 displays an alert object 88 indicating an alert near a data icon 74 corresponding to the document B. Thus, the user may grasp the electronic data whose process is stuck in the workflow.

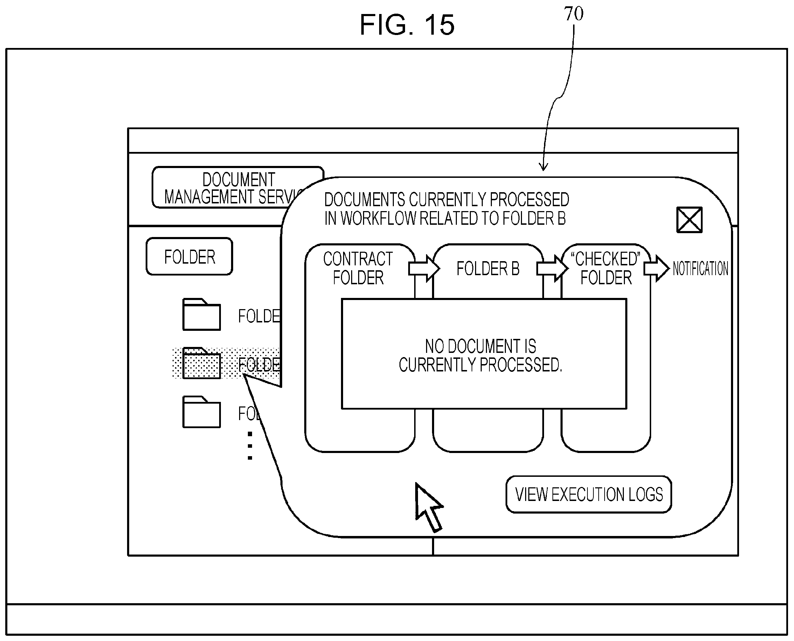

The workflow associated with the folder selected by the user may have no currently processed electronic data. In other words, none of the folders associated with the workflow may store electronic data. In this case, the display controller 24 may display, as the status of the workflow in the status dialog 70, information indicating that the workflow has no currently processed electronic data. For example, as illustrated in Fig. 15, the display controller 24 displays a message "No document is currently processed." in the status dialog 70.

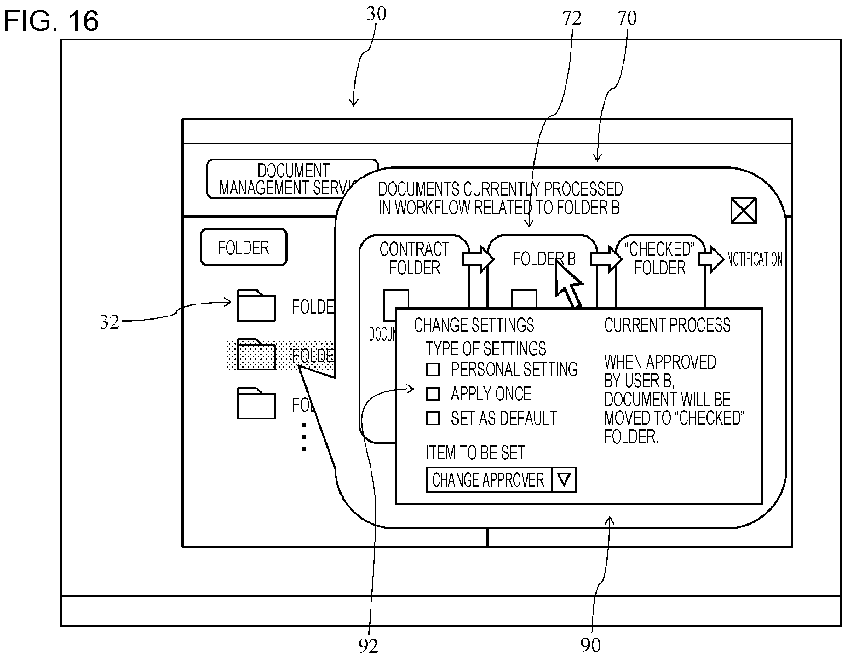

The settings of the workflow may be changed by a user's action on the status dialog 70. In other words, the setting changer 26 may change the settings of the workflow (update the settings in the workflow DB 20) in response to the user's action on the status dialog 70. For example, if the user places the cursor on the folder object 72 displayed in the status dialog 70, the display controller 24 displays a setting change box 90 for the settings of the workflow in the status dialog 70 as illustrated in Fig. 16. The user may change the settings of the workflow by the action on the setting change box 90. Examples of the change of the settings of the workflow include, but not limited to, change of the processing operation of each process in the workflow, change of the folder associated with the process, and addition of a new process.

It may be inappropriate that the settings of the workflow changed in the setting change box 90 are applied to the processes on all the pieces of electronic data entered into the workflow. Therefore, the user may set a range of electronic data to which the changed settings of the workflow are applied. The settings of the workflow before the change by the user's action on the setting change box 90 are referred to herein as "pre-change settings", and the settings of the workflow after the change by the user's action on the setting change box 90 are referred to herein as "post-change settings". In the pieces of electronic data entered into the workflow, the electronic data to which the post-change settings are applied is referred to as "first electronic data", and the electronic data to which the pre-change settings are applied (in other words, the electronic data other than the first electronic data) is referred to as "second electronic data".

In this exemplary embodiment, the user may specify an application rule for determining the range of the first electronic data in the setting change box 90. For example, the display controller 24 displays the setting change box 90 including application rule checkboxes 92 to be used for specifying the application rule as illustrated in Fig. 16. In the example of Fig. 16, the setting change box 90 includes selective application rule checkboxes 92 indicating "Personal setting", "Apply once", and "Set as default".

For example, if the user changes the settings of the workflow with "Personal setting" selected in the application rule checkboxes 92, the range of the first electronic data to which the post-change settings are applied may be set to the electronic data entered into the workflow by the user. In other words, electronic data entered into the workflow by any other user is the second electronic data to which the pre-change settings are applied.

If the user changes the settings of the workflow with "Apply once" selected in the application rule checkboxes 92, the range of the first electronic data to which the post-change settings are applied may be set only to the electronic data currently entered into the workflow by the user. In other words, electronic data other than the electronic data currently selected by the user is the second electronic data to which the pre-change settings are applied.

If the user changes the settings of the workflow with "Set as default" selected in the application rule checkboxes 92, the range of the first electronic data to which the post-change settings are applied may be set to all the pieces of electronic data entered into the workflow. In this case, there is no second electronic data.

The above-mentioned application rules for determining the range of the first electronic data are examples, and various other application rules are conceivable. For example, the first electronic data may be a predetermined number of pieces of electronic data entered into the workflow, electronic data entered into the workflow within a predetermined period, or electronic data entered by a user belonging to a certain group.

When the user changes the settings of the workflow while specifying the application rule for determining the range of the first electronic data in the setting change box 90, the setting changer 26 newly stores the post-change settings in association with the workflow in the workflow DB 20 while keeping the pre-change settings associated with the workflow. The setting changer 26 also stores, in the workflow DB 20, the specified application rule and the user ID of the user in association with the workflow.

When the electronic data is entered into the workflow, the processing executor 22 refers to the workflow DB to determine whether the electronic data is the first electronic data or the second electronic data, in other words, whether to execute the workflow on the electronic data by applying the pre-change settings or the post-change settings.

In response to a user's action on the data icon 74 displayed in the status dialog 70, the process may be executed on the electronic data corresponding to the data icon 74. In other words, in response to the user's action on the data icon 74 displayed in the status dialog 70, the processing executor 22 may execute the process on the electronic data corresponding to the data icon 74.

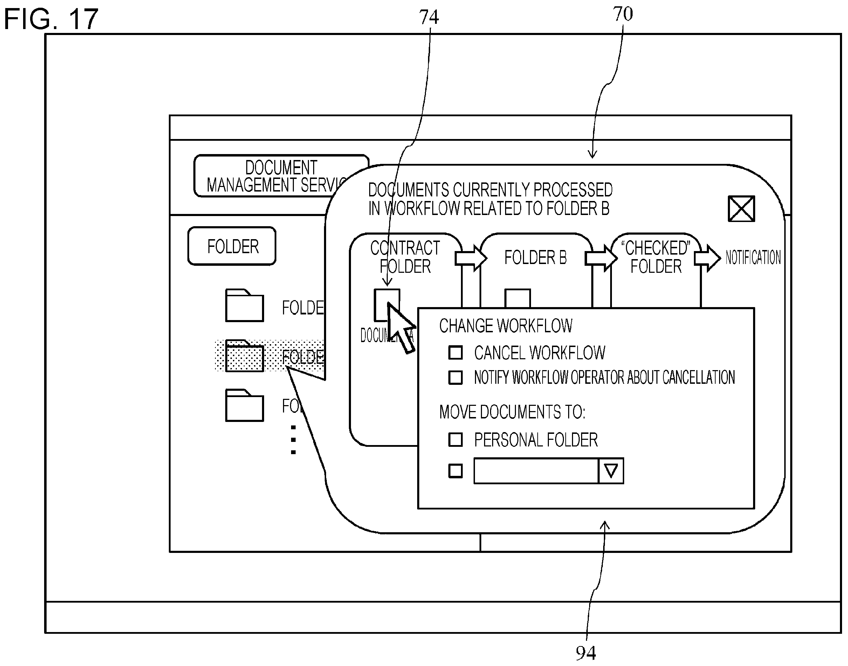

For example, if the user places the cursor on the data icon 74 displayed in the status dialog 70, the display controller 24 displays an action box 94 in the status dialog 70 to give an instruction for the process on the electronic data corresponding to the data icon 74 as illustrated in Fig. 17. The user may change the settings of the workflow by the action on the action box 94. For example, by the action on the action box 94, the user may perform a process of deleting the electronic data from the workflow, a process of deleting the electronic data from the workflow and notifying the user who has entered the electronic data into the workflow, or a process of moving the electronic data to another folder in the workflow. The processes executable by the action on the action box 94 are not limited thereto.

### <Flow of process in information processing apparatus>

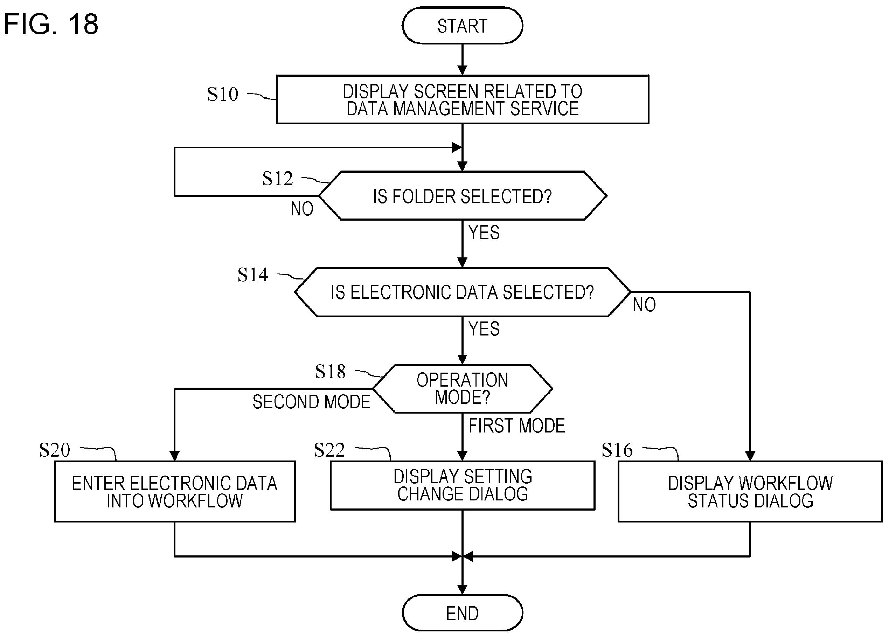

The configuration of the information processing apparatus 10 according to this exemplary embodiment is as described above. A flow of a process in the information processing apparatus 10 according to this exemplary embodiment is described with reference to a flowchart of Fig. 18.

In Step S10, in response to access to the data management service from a user, the processing executor 22 authenticates the user. If the user is authenticated, the display controller 24 causes a display of a user terminal of the user to display the data management service window 30 including folder icons 32 corresponding to folders associated with a workflow (see Fig. 3 or Fig. 11).

In Step S12, the processor 16 determines whether the user selects any folder icon 32 corresponding to the folder associated with the workflow. For example, the processor 16 determines whether a cursor is placed on the folder icon 32. If the folder icon 32 is selected, the process proceeds to Step S14.

In Step S14, the processor 16 determines whether the user selects electronic data when selecting the folder icon 32 in Step S10. For example, the processor 16 determines that the user selects electronic data if the user places the cursor on the folder icon 32 while dragging a data icon 34 corresponding to the electronic data or if the user places the cursor on the folder icon 32 with the electronic data saved into a clipboard. The processor 16 determines that the user does not select electronic data if the user places the cursor on the folder icon 32 without saving the electronic data into the clipboard.

If the user does not select electronic data, the process proceeds to Step S16. In Step S16, the display controller 24 displays the status dialog 70 showing the status of the workflow associated with the folder selected by the user in the data management service window 30.

If the user selects electronic data in Step S14, the process proceeds to Step S18.

In Step S18, the processing executor 22 determines whether the operation mode of the information processing apparatus 10 for the user is the first operation mode or the second operation mode.

If the operation mode of the information processing apparatus 10 is the second operation mode, the process proceeds to Step S20. In Step S20, the processing executor 22 enters the electronic data selected by the user into the workflow associated with the folder selected by the user.

If the operation mode of the information processing apparatus 10 is the first operation mode, the process proceeds to Step S22. In Step S22, the display controller 24 displays the setting change dialog 40 in the data management service window 30 (see Fig. 4). As described above, the user may enter the selected electronic data into the workflow by operating the confirmation button 46 after the settings of the workflow are changed in the setting change dialog 40.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

## Claims

1. An information processing apparatus (10) comprising:
a processor (16) configured to:
cause a display to display a folder (32) associated with a workflow;
if a user selects the folder (32) with electronic data (34) selected, execute the workflow on the electronic data (34); and
if the user selects the folder (32) without selecting the electronic data (34), cause the display to display a status of the workflow.

2. The information processing apparatus (10) according to Claim 1, wherein the processor is configured to:
cause the display to display a data icon (34) corresponding to the electronic data; and
if the user drags the data icon (34) onto the folder (32), determine that the user selects the folder (32) with the electronic data (34) selected.

3. The information processing apparatus (10) according to Claim 1 or 2, wherein the processor (16) is configured to, if a cursor moving on a screen is placed on the folder (32) by an action of the user without dragging the data icon (34), determine that the user selects the folder (32) without selecting the electronic data (34).

4. The information processing apparatus (10) according to Claim 1, wherein the processor (16) is configured to, if the user selects the folder (32) with the electronic data (34) saved into a clipboard in a memory configured to temporarily save data, determine that the user selects the folder (32) with the electronic data (34) selected.

5. The information processing apparatus (10) according to Claim 1 or 4, wherein the processor (16) is configured to, if the user selects the folder (32) without saving the electronic data (34) into a clipboard in a memory configured to temporarily save data, determine that the user selects the folder (32) without selecting the electronic data (34).

6. A program causing a computer to execute a process for processing information, the process comprising:
causing a display to display a folder (32) associated with a workflow;
if a user selects the folder (32) with electronic data (34) selected, executing the workflow on the electronic data (34); and
if the user selects the folder (32) without selecting the electronic data (34), causing the display to display a status of the workflow.

7. An information processing method comprising:
causing a display to display a folder (32) associated with a workflow;
if a user selects the folder (32) with electronic data (34) selected, executing the workflow on the electronic data; and
if the user selects the folder (32) without selecting the electronic data (34), causing the display to display a status of the workflow.

## Patentansprüche

1. Informationsverarbeitungsvorrichtung (10), umfassend:
einen Prozessor (16), der so konfiguriert ist, dass er:
eine Anzeige veranlasst, einen Ordner (32), der einem Workflow zugeordnet ist, anzuzeigen;
wenn ein Benutzer den Ordner (32) mit ausgewählten elektronischen Daten (34) auswählt, den Workflow auf den elektronischen Daten (34) ausführt; und
wenn der Benutzer den Ordner (32) auswählt, ohne die elektronischen Daten (34) auszuwählen, die Anzeige veranlasst, einen Status des Workflows anzuzeigen.

2. Informationsverarbeitungsvorrichtung (10) nach Anspruch 1, wobei der Prozessor so konfiguriert ist, dass er:
die Anzeige veranlasst, ein Daten-Icon (34), das den elektronischen Daten entspricht, anzuzeigen; und
wenn der Benutzer das Daten-Icon (34) auf den Ordner (32) zieht, bestimmt, dass der Benutzer den Ordner (32) mit den ausgewählten elektronischen Daten (34) auswählt.

3. Informationsverarbeitungsvorrichtung (10) nach Anspruch 1 oder 2, wobei der Prozessor (16) so konfiguriert ist, dass er, wenn ein Cursor, der sich auf einem Bildschirm bewegt, durch eine Aktion des Benutzers ohne Ziehen des Daten-Icons (34) auf den Ordner (32) platziert wird, bestimmt, dass der Benutzer den Ordner (32) auswählt, ohne die elektronischen Daten (34) auszuwählen.

4. Informationsverarbeitungsvorrichtung (10) nach Anspruch 1, wobei der Prozessor (16) so konfiguriert ist, dass er, wenn der Benutzer den Ordner (32) mit den elektronischen Daten (34), die in eine Zwischenablage in einem Speicher, der so konfiguriert ist, dass er Daten vorübergehend speichert, gespeichert werden, auswählt, bestimmt, dass der Benutzer den Ordner (32) mit den ausgewählten elektronischen Daten (34) auswählt.

5. Informationsverarbeitungsvorrichtung (10) nach Anspruch 1 oder 4, wobei der Prozessor (16) so konfiguriert ist, dass er, wenn der Benutzer den Ordner (32) auswählt, ohne die elektronischen Daten (34) in eine Zwischenablage in einem Speicher, der so konfiguriert ist, dass er Daten vorübergehend speichert, zu speichern, bestimmt, dass der Benutzer den Ordner (32) auswählt, ohne die elektronischen Daten (34) auszuwählen.

6. Programm, das einen Computer veranlasst, einen Prozess zum Verarbeiten von Informationen auszuführen, wobei der Prozess umfasst:
Veranlassen einer Anzeige, einen Ordner (32), der einem Workflow zugeordnet ist, anzuzeigen;
wenn ein Benutzer den Ordner (32) mit ausgewählten elektronischen Daten (34) auswählt, Ausführen des Workflows auf den elektronischen Daten (34); und
wenn der Benutzer den Ordner (32) auswählt, ohne die elektronischen Daten (34) auszuwählen, Veranlassen der Anzeige, einen Status des Workflows anzuzeigen.

7. Informationsverarbeitungsverfahren, umfassend:
Veranlassen einer Anzeige, einen Ordner (32), der einem Workflow zugeordnet ist, anzuzeigen;
wenn ein Benutzer den Ordner (32) mit ausgewählten elektronischen Daten (34) auswählt, Ausführen des Workflows auf den elektronischen Daten; und
wenn der Benutzer den Ordner (32) auswählt, ohne die elektronischen Daten (34) auszuwählen, Veranlassen der Anzeige, einen Status des Workflows anzuzeigen.

## Revendications

1. Appareil de traitement d'informations (10) comprenant :
un processeur (16) configuré pour :
amener un affichage à afficher un dossier (32) associé à un flux de travail ;
si un utilisateur sélectionne le dossier (32) alors que des données électroniques (34) sont sélectionnées, exécuter le flux de travail sur les données électroniques (34) ; et
si l'utilisateur sélectionne le dossier (32) sans sélectionner les données électroniques (34), amener l'affichage à afficher un état du flux de travail.

2. Appareil de traitement d'informations (10) selon la revendication 1, dans lequel le processeur est configuré pour :
amener l'affichage à afficher une icône de données (34) correspondant aux données électroniques ; et
si l'utilisateur fait glisser l'icône de données (34) sur le dossier (32), déterminer que l'utilisateur sélectionne le dossier (32) alors que les données électroniques (34) sont sélectionnées.

3. Appareil de traitement d'informations (10) selon la revendication 1 ou la revendication 2, dans lequel le processeur (16) est configuré pour, si un curseur se déplaçant sur un écran est placé sur le dossier (32) par une action de l'utilisateur sans faire glisser l'icône de données (34), déterminer que l'utilisateur sélectionne le dossier (32) sans sélectionner les données électroniques (34).

4. Appareil de traitement d'informations (10) selon la revendication 1, dans lequel le processeur (16) est configuré pour, si l'utilisateur sélectionne le dossier (32) alors que les données électroniques (34) sont enregistrées dans un presse-papiers dans une mémoire configurée pour enregistrer temporairement des données, déterminer que l'utilisateur sélectionne le dossier (32) alors que les données électroniques (34) sont sélectionnées.

5. Appareil de traitement d'informations (10) selon la revendication 1 ou la revendication 4, dans lequel le processeur (16) est configuré pour, si l'utilisateur sélectionne le dossier (32) sans enregistrer les données électroniques (34) dans un presse-papiers dans une mémoire configurée pour enregistrer temporairement des données, déterminer que l'utilisateur sélectionne le dossier (32) sans sélectionner les données électroniques (34).

6. Programme amenant un ordinateur à exécuter un processus de traitement d'informations, le processus comprenant :
amener un affichage à afficher un dossier (32) associé à un flux de travail ;
si un utilisateur sélectionne le dossier (32) alors que des données électroniques (34) sont sélectionnées, exécuter le flux de travail sur les données électroniques (34) ; et
si l'utilisateur sélectionne le dossier (32) sans sélectionner les données électroniques (34), amener l'affichage à afficher un état du flux de travail.

7. Procédé de traitement d'informations comprenant :
amener un affichage à afficher un dossier (32) associé à un flux de travail ;
si un utilisateur sélectionne le dossier (32) alors que des données électroniques (34) sont sélectionnées, exécuter le flux de travail sur les données électroniques ; et
si l'utilisateur sélectionne le dossier (32) sans sélectionner les données électroniques (34), amener l'affichage à afficher un état du flux de travail.
